# EUROPEAN PATENT APPLICATION

(11) **EP 1 817 999 A2**
(43) Date of publication of application: **15.08.2007**
(21) Application number: 06077118.5
(22) Date of filing: 28.11.2006
(51) Int. Cl.: A47K 10/14

(54) **Holder**

(30) Priority: 13.02.2006 RU 2006104974
(71) Applicant: Usov, Konstantin, 198215 St. Petersburg (RU)
(72) Inventor: Usov, Konstantin, 198215 St. Petersburg (RU)
(74) Representative: Partio, Erja

(57) **Abstract**

A holder (1), having a body part (2) and a holder part (3) fixed to the body part (2), which holder part comprises a plate, having one or more slots (4) to form holder projections (5) to the holder part wherein the holder (1) has at least two holder parts (3) which are arranged one on the other.

## Description

Subject of the invention is a holder defined in claim 1 and an object for the holder defined in claim 12.

### PRIOR ART

By a holder is meant any holder that can be fitted to any solid surface, for example a holder for kitchen equipment, towels, cloth tool or similar.

From the prior art there are known different kinds of holders for, for example, towels and clothing, which holders comprise a body and a holder part attached therein, where there are one or more slots in the holder part. These slots form holder projections to the holder part. The slots in the holder part make it possible for the towel or similar object to be pushed inside a holder, wherein the projections being elastic grab the towel so that it remains hanging from the holder. Following references define these kinds of holders: SE 66321, US 2,051,068, US 2,339,187 and US 2,513,846.

A problem with the prior art holders is that the holder force is weak and object does not keep hanging form the holder. A problem with the holders of the prior art is that they consist of only one holder part, wherein the holder force formed by this one holder part is too weak to keep heavier objects hanging and they easily slip from the holder.

The object of the present invention is to improve the known holder.

Especially the object of the invention is to bring forth a new and simple holder of which holder force is improved compared to the known holders. Further, the object of the invention is to bring forth an object to be attached to a holder of the present invention.

### SUMMARY OF THE INVENTION

The characterizing features of the present holder and object are defined in the claims.

The invention is based on a holder to be attached to a fixed support, which holder comprises a body part and a holder part fixed to the body part. The holder part comprises a plate, having one or more slots to form holder projections to the holder part. Further, the holder is characterized in that it has at least two holder parts which are arranged on top of each other.

By an object is meant for example a knife, a spoon, a fork, a pencil, a towel, clothing, kitchen tool, tool and/or any object that needs hanging form the holder.

By a fixed support is meant a wall, a ceiling, a door, a closet, a bottom of a cupboard or any other support that a holder can be attached to. Further, the fixed support can be a hole in a wall or other solid material, a gap or an opening, which is already present in, for example, a wall, and into which the holder in accordance with the present invention can be fitted and attached. The fixed support can further for example be an existing, empty, unused plug hole in the wall. In this case there is no need to make any new holes in a wall, whereby the appearance is even improved by filling such an unused hole in the wall. Further improvement in such a case is that there is no need make any new, for example, screw holes in the wall.

According to one embodiment of the present invention the body part comprises attaching tools arranged to attach the holder to an empty wall socket. By attaching tools are meant any of the below described attaching tools. The holder may in this way, for example, be a part of a wall socket.

Further the body part can comprise attaching tools arranged to attach a cover. The cover may, for example, protect the holder from getting dirty or protect gaps between the support and the holder. The cover may be for example cover of a wall socket or similar, or any other kind of cover.

In one preferred embodiment of the present invention the body part comprises a first ending arranged to be fixed to the fixed support, and a second ending. Further, the holder part can be attached to the second ending of the body part or it can be attached between the first ending and the second ending. Alternatively, the body part can comprise just one ending to which the holder part can be attached to and, whereby the same ending is attached to the fixed support.

The holder can be attached to a fixed support with attaching tools located in the first ending. By attaching tools are meant for example screws, nails, a suction pad, a sticker, a glue or any other similar tools with which the holder can be attached to the fixed support.

The body part of the holder can be for example a cylindrical hollow cup, of which the first and the second ending are open or only one ending is open. Alternatively, the body part has a substantially flat form. The cross section of the body part can be for example circular, triangular, square or any other polygon or it can be oval or it can be any other form. According to one embodiment of the present invention the body part of the holder can have one or more openings or channels to remove the humid and liquid that gathers inside the holder.

According to what is mentioned earlier the holder of the invention has holder parts which have been fixed to the body part. The holder parts can be fixed to the body part with any known means, for example by gluing, squeezing, recessing or by any other fixing means. The holder parts are arranged on top of each other and to such a position that they can be accessed by the user from one side and that there exists some empty space on the opposite side of the holder parts. The body part and the holder parts can be prepared during the same preparation phase or they can be prepared separately and after that connected in a later phase. They can be of a same material or of different materials.

By a holder part is preferably meant a plate preferably having the same shape as the cross cutting of the body part and being of elastic or rather stiff material. The holder part can be of the same or different material than the body part. The holder and/or its different parts can be formed of many different materials such as rubber, plastic and/or any other elastic material and/or stiff material according to the purpose of use. The holder, or some part of it, can be made of, for example, wood or metal.

The holder part is essentially flexible and flat and has one or more slots, which form so called holder projections between the slots to the holder part. In one embodiment of the invention one or more slots extend from the centre of the holder part towards the outer rim of the holder part, for example to the same direction as the radius. Slots having the same direction as the radius can be formed to the holder part for example one, two, three etc. The holder part can also have slots of any other form. With these slots is achieved the required amount of holder projections to the holder part, which attach to the object that has been placed to the holder preventing it from falling off the holder. The ends of the slots can have round openings to prevent the holder part material from breaking, for example by ripping. Also the possible humid gathering inside the holder can vaporise through said openings.

According to one embodiment of the present invention the holder part is concave towards the inner part of the body part, i.e. to the direction of the first ending, to achieve a better holding force.

According to the invention an the holder has at least two holder parts, which are arranged one upon the other. Preferably these at least two holder parts are arranged so that the slots within them are not in an eclipsed conformation. The holder can also have three or more holder parts on top of each other.

Further, the invention comprises an object that can be attached to the holder of the present invention, which object has a hand part, and a knob part at the end of the hand part. The object can be for example a kitchen tool, such as a scoop or a knife, or a tool or any other object to be hanged to a holder. By means of the knob part the tool is fixed tightly to the holder of the invention and does not slip away of it.

The benefits of the holder of the invention compared to the prior art holders is that the holder of the invention has at least two holder parts arranged on top of each other preferably so that the slots are not eclipsed. By means of these at least two holder parts is achieved significantly better holder grip than by the prior art holders. The benefit of the invention is that the holder is therefore much more better in holding objects than the prior art holders. Further the object to be hanged to a holder has such a form that it significantly increases the holding force and thus improves holding.

### DESCRIPTION OF THE DRAWINGS

In the following the invention is described in detail by means of examples referring to the enclosed drawings in which
Figure 1 represents a holder according to the invention,
Figure 2 represents a cross section of a holder according to the invention, it being attached to a fixed support,
Figures 3a and 3b represent examples of two holder parts according to the invention, and
Figure 4 represents an object attached to the holder of the invention.

### DESCRIPTION OF THE INVENTION

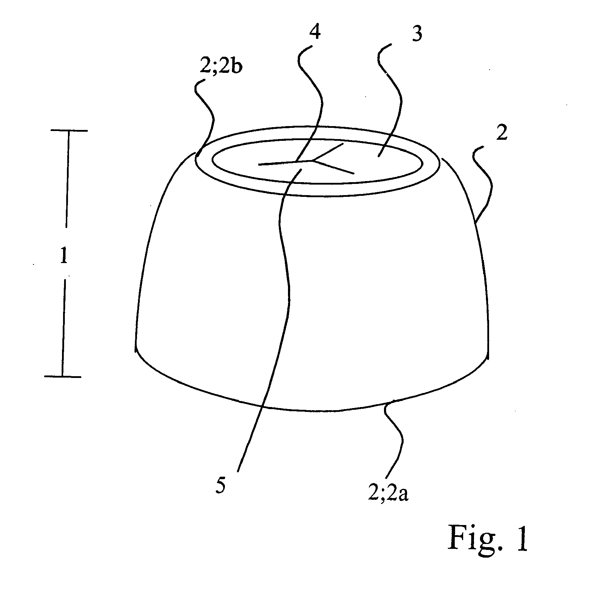

The holder in accordance with one embodiment of the invention in figure 1 has a body part 2 and on the first ending 2a of the body part fixed a holder part 3. In figure 1 the holder has a holder part 3 having three slots 4 and therefore three holder projections 5. In figure 1 the body part 2 is a cylindrical hollow cup, which has a cross section of a circle. The holder part 3 has a similar circular shape. However, this is only one example of the holder in accordance with the present invention. The body part of the holder may for example have a flat form, whereby the holder part is arranged between the first ending and the second ending of the body part.

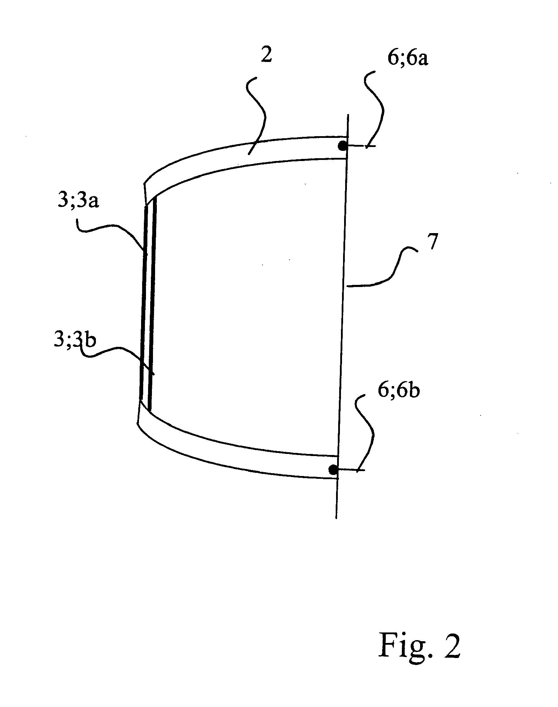

In figure 2 a holder 1 has been attached to a fixed support 7, for example a wall, by means of attaching tools 6. The attaching tools can be for example screws, nails or any other tools that suite to attaching the holder to the fixed support, for example a sticker. In figure 2 the holder 1 has two holder parts 3a and 3b which are arranged on each other so that they are on top of each other and the slots 4 in them are not eclipsed.

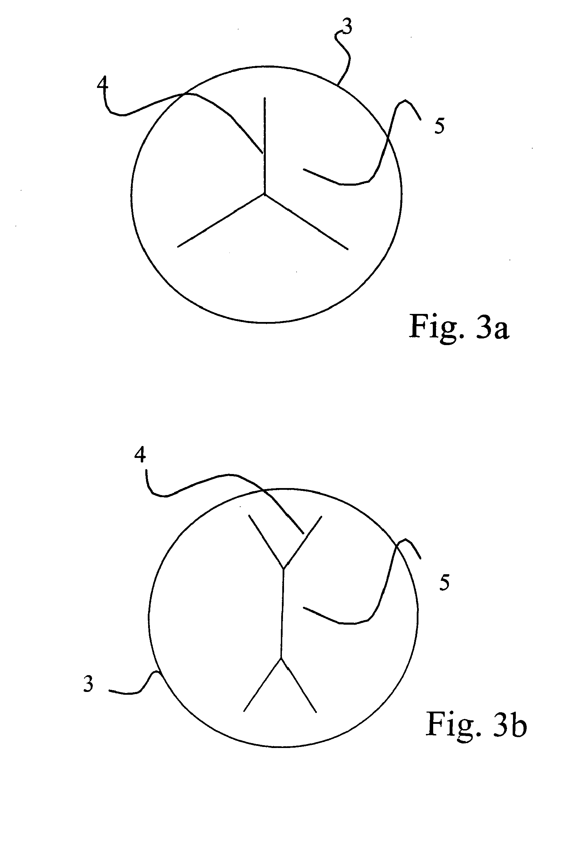

In figure 3a and 3b there are two examples of slots and holder projections formed to the holder parts.

According to one embodiment of the holder in accordance with the invention represented in figures 1-3a,b, the holder 1 is attached to the fixed support 7, for example a wall, and, for example, a part of a towel can be pushed through its holder part 3, wherein the holder projections of these holder parts 3 form a holder grip of the towel preventing it from falling off the holder 1. The towel can be removed from the holder simply by drawing the towel off the holder.

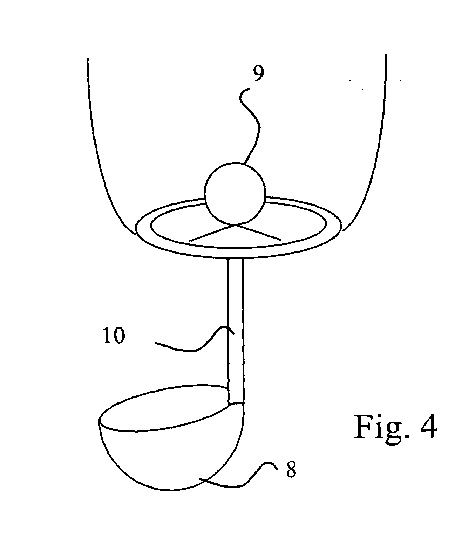

In figure 4 there has been represented a holder in accordance with one embodiment of the invention. The holder can be attached to a fixed support such as a wall, or a closet or a bottom of a closet. In figure 4 an object 8 is attached to a holder 1 of the present invention, the object being any object, for example a kitchen tool such as a scoop. The object 8 has a hand part 10 and on top of it a knob part 9, making it possible to attach it easily to hang on the holder of the invention. The combined effect of the, preferably at least two, holder parts of the invention and the knob part 9 of the object 8 form a very effective holding grip, which prevents even a heavier object from falling of the holder. Preferably the knob part 9 has a diameter larger than the hand part 10 or at least there is a groove between the knob part 9 and the hand part 10 which groove has a smaller diameter on at least one dimension than the knob part 9.

The invention is not limited to what is presented in the drawings, but many other forms and variations are possible in the scope of the patent claims defining the invention.

## Claims

1. A holder (1) (7), having a body part (2) and a holder part (3) fixed to the body part (2), which holder part comprises a plate, having one or more slots (4) to form holder projections (5) to the holder part, **characterized in that** the holder (1) has at least two holder parts (3) which are arranged one on the other

2. A holder according to claim 1, **characterized in that** the body part comprises a first ending (2a) arranged to be fixed to the fixed support, and a second ending (2b) and, wherein the holder part (3) is attached to the second ending (2b) of the body part or is attached between the first ending (2a) and the second ending (2a).

3. A holder according to any of claims 1-2 **characterized in that** slots (4) of the at least two holder parts (3) on top of each other are not eclipsed.

4. A holder according to any of claims 1-3 **characterized in that** one or more slots (4) extend from the center of the holder part (3) towards the outer rim of the holder part.

5. A holder according to any of claims 2-4 **characterized in that** the holder part (3) is concave to the direction of the first ending (2a).

6. A holder according to any of claims 1-5 **characterized in that** the body part (2) has a cross section of circular shape, square shape, polygon shape, oval shape, or any other shape.

7. A holder according to any of claims 1-6 **characterized in that** the body part (2) has a substantially flat form or a cup form.

8. A holder according to any of claims 2-7 **characterized in that** the first ending (2a) of the body part (2) has attaching tools (6) to attach the holder to a fixed support.

9. A holder according to any of claims 1-8 **characterized in that** the body part has an opening and/or channel.

10. A holder according to any of claims 1-9, **characterized in that** the body part (2) has attaching tools arranged to attach the holder to an empty wall socket.

11. A holder according any of claims 1-10 **characterized in that** the body part (2) has attaching tools arranged to attach a cover.

12. An object (8) **characterized in that** it is to be attached to a holder (1) according to claims 1-11 and that the object (8) has a tool part (10), and in the end of the tool part a knob part (9) which knob has at least on one dimenstion a larger diameter than the smallest diameter in the joining of the tool part and the knob part.
